# EUROPEAN PATENT APPLICATION

(11) **EP 4 661 183 A1**
(43) Date of publication of application: **10.12.2025**
(21) Application number: 25180927.3
(22) Date of filing: 05.06.2025
(51) Int. Cl.: H01M 50/325

(54) **PRESSURE RELIEF VALVE AND BATTERY PACK**

(30) Priority: 07.06.2024 CN 202421313834 U; 13.05.2025 WO PCT/CN2025/094699
(71) Applicant: Eve Energy Co., Ltd., Huizhou, Guangdong 516006 (CN)
(72) Inventor: LIN, Zheng, Huizhou, Guangdong, 516006 (CN); ZHANG, Yuhong, Huizhou, Guangdong, 516006 (CN)
(74) Representative: Berggren Oy

(57) **Abstract**

Provided are a pressure relief valve (100) and a battery pack (10). A pressure relief valve (100) includes a valve body (110). The valve body (110) is provided with a pressure relief hole (1100) penetrating through the valve body (110) along a length direction (LD) of the valve body (110). At least one whistle hole (1130) is disposed at a side wall (SW) of the valve body (110). Each of the at least one whistle hole (1130) extends from an outer side surface (1104) of the valve body (110) to an inner side surface (1103) of the valve body (110), to form an opening (1131) communicated with the pressure relief hole (1100) at the inner side surface (1103). The whistle hole (1130) is configured to generate a sound when a portion of gas in the pressure relief hole (1100) is discharged through the whistle hole (1130).

## Description

### TECHNICAL FIELD

The present disclosure relates to a battery technology, and more particularly, to a pressure relief valve and a battery pack.

### BACKGROUND

In related art, in response that a thermal runaway occurs in a battery module within a battery pack, a battery management system (BMS) in the battery pack sends a thermal runaway fault signal for warning.

However, in practical applications, in the case that the thermal runaway occurs in the battery module, high-temperature gas ejected from battery cells of the battery module may damage the BMS, so that the BMS cannot send the thermal runaway fault signal timely for warning.

### SUMMARY

It is an object of the present disclosure to provide a pressure relief valve and a battery pack that overcomes the disadvantages of the prior art and improves the sending of the thermal runaway fault signal by the BMS for warning.

Some Embodiments of the present disclosure provide a pressure relief valve. The pressure relief valve includes a valve body. The valve body is provided with a pressure relief hole penetrating through the valve body along a length direction of the valve body, at least one whistle hole is disposed at a side wall of the valve body, each of the at least one whistle hole extends from an outer side surface of the valve body to an inner side surface of the valve body, to form an opening communicated with the pressure relief hole at the inner side surface, and the whistle hole is configured to generate a sound when a portion of gas in the pressure relief hole is discharged through the whistle hole.

Some embodiments of the present disclosure further provide a battery pack. The battery pack includes: a housing, including a cavity; a battery module disposed within the cavity; and a pressure relief valve including a valve body, where the valve body is provided with a pressure relief hole penetrating through the valve body along a length direction of the valve body, at least one whistle hole is disposed at a side wall of the valve body, each of the at least one whistle hole extends from an outer side surface of the valve body to an inner side surface of the valve body, to form an opening communicated with the pressure relief hole at the inner side surface, and the whistle hole is configured to generate a sound when a portion of gas in the pressure relief hole is discharged through the whistle hole, where the pressure relief valve is connected to the housing, and the pressure relief hole of the pressure relief valve is configured to communicate the cavity with outside of the housing.

### ADVANTAGES OF THE APPLICATION

The pressure relief valve according to some embodiments of the present disclosure is provided with the whistle hole on the outer side surface of the valve body. When the thermal runaway occurs in the battery module, the high-temperature gas ejected from battery cells of the battery module is discharged to the outside of the housing of the battery pack through the pressure relief hole. During ejection, a portion of the high-temperature gas is discharged through the whistle hole at high speed along with a generated sound signal thereform. In this case, even if the BMS fails and cannot send the thermal runaway fault signal timely for warning, the sound signal generated by the pressure relief valve may be used for warning.

In the battery pack according to some embodiments of the present disclosure, the pressure relief valve is provided with the whistle hole on the outer side surface of the valve body. When the thermal runaway occurs in the battery module, the high-temperature gas ejected from battery cells of the battery module is discharged to the outside of the housing of the battery pack through the pressure relief hole. During ejection, a portion of the high-temperature gas is discharged through the whistle hole at high speed along with a generated sound signal thereform. In this case, even if the BMS fails and cannot send the thermal runaway fault signal timely for warning, the sound signal generated by the pressure relief valve may be used for warning, improving the safety of the battery pack.

### BRIEF DESCRIPTION OF THE DRAWINGS

FIG. 1 is a schematic diagram of a structure of a pressure relief valve according to some embodiments of the present disclosure.
FIG. 2 is a schematic diagram of a pressure relief valve from another viewing angle according to some embodiments of the present disclosure.
FIG. 3 is a cross-sectional view of a pressure relief valve taken along a direction from an inlet to an outlet of a pressure relief hole according to some embodiments of the present disclosure.
FIG. 4 is an exploded diagram of a structure of a pressure relief valve according to some embodiments of the present disclosure.
FIG. 5 is a cross-sectional view of an embodiment of a valve body and a flow divider taken along a direction from an inlet to an outlet of a pressure relief hole according to some embodiments of the present disclosure.
FIG. 6 is a schematic diagram of a structure of a battery pack according to some embodiments of the present disclosure.
FIG. 7 is a cross-sectional view of a battery pack taken along a direction from an inlet to an outlet of a pressure relief hole according to some embodiments of the present disclosure.

### List of reference signs:

10 Battery pack; 11 Housing; 12 Cavity; 13 Battery module; 100 Pressure relief valve; 110 Valve body; 1100 Pressure relief hole; 1101 Inlet; 1102 Outlet; 1103 Inner side surface; 1104 Outer side surface; 1110 First hole segment; 1120 Second hole segment; 1121 Flow channel; 1130 Whistle hole; 1131 Opening; 111 Inclined surface; 112 Side surface; 120 Flow divider; 121 Flow-dividing plate; 130 Sharp portion; 131 Tip; 132 Connection end; 140 Snap-fit portion; 150 Mounting protrusion; 160 Sealing film; and 170 Sealing member.

### DETAILED DESCRIPTION OF THE EMBODIMENTS

In the description of the present disclosure, unless otherwise expressly limited and defined, the terms "connected", "coupled", "fixed" are to be understood in a broad sense, for example, as a fixed connection, as a detachable connection, or as a whole, as a mechanical connection or an electrical connection, as a direct connection or indirect connection with an intermediate medium, or as an internal communication of the two elements or interaction of the two elements. The specific meaning of the above terms in the present disclosure may be understood by one of ordinary skill in the art as the case may be.

In the present disclosure, unless otherwise expressly limited and defined, the first feature above or under the second feature may include that the first feature directly contacts the second feature, or may include that indirect contact of the first and second features by additional features therebetween, unless expressly stated and defined otherwise. The first feature "above", "over" and "on" the second feature includes the first feature directly above and diagonally above the second feature, and the first feature has a higher height than the second feature. The first feature "below", "under" and "underneath" the second feature includes the first feature directly below and diagonally below the second feature, and the first feature has a lower height than the second feature.

In the description of some embodiments, the terms "up", "down", "left", "right", "front", "back", or other orientations or positional relationships are based on those shown in the accompanying drawings for the purpose of facilitating description and simplifying operation, and are not intended to indicate or imply that the device or element referred to must have a particular orientation, be constructed and operated in a particular orientation, and are therefore not to be construed as a limitation of the present disclosure. Therefore, it is not to be construed as limiting the present disclosure. In addition, the terms "first" and "second" are used to make a distinction in the description and have no special meaning.

In related art, in response that a thermal runaway occurs in a battery module within a battery pack, a battery management system (BMS) in the battery pack sends a thermal runaway fault signal for warning. However, in practical applications, in the case that the thermal runaway occurs in the battery module, high-temperature gas ejected from battery cells may damage the BMS, so that the BMS cannot send the thermal runaway fault signal timely for warning. In addition, if the battery pack is subjected to compression or puncture, the BMS may be damaged first, and then when thermal runaway of the battery module occurs, rendering it unable to send the thermal runaway fault signal timely to prompt in response to the thermal runaway of the battery module.

When the battery pack is applied in vehicles, the failure of the BMS to send the thermal runaway fault signal timely for warning during the thermal runaway in the battery module may not only result in property loss but also reduce the escape time for people in the vehicle, potentially leading to severe safety incidents.

To improve these issues, embodiments of the present disclosure provide a pressure relief valve applied for a battery pack.

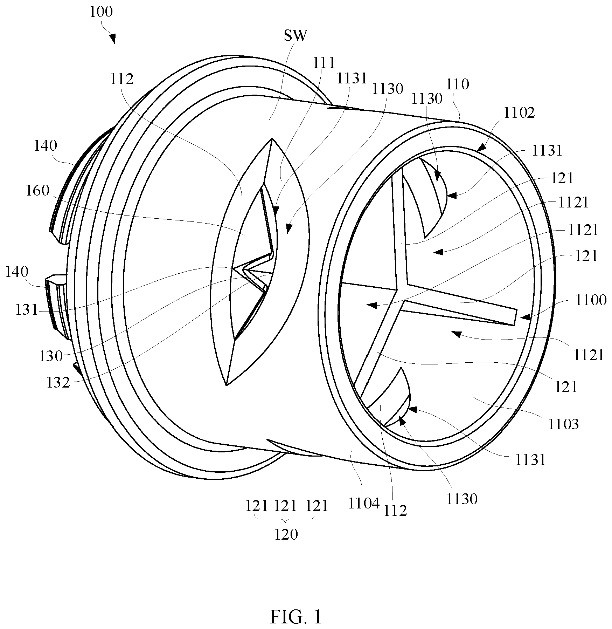

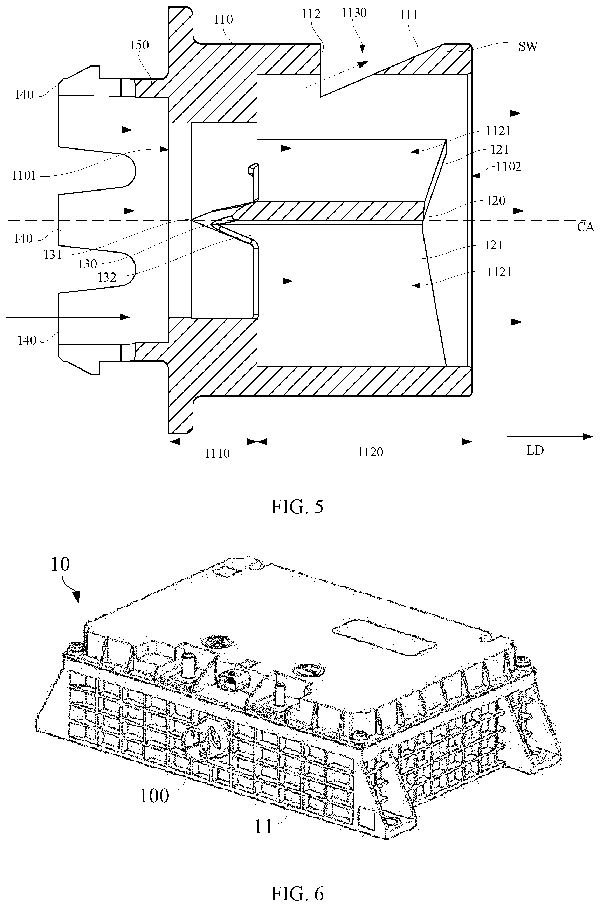

As shown in FIGS. 1, 5, 6, and 7, the pressure relief valve 100 includes a valve body 110. The valve body 110 is provided with a pressure relief hole 1100 penetrating through the valve body 110 along a length direction LD of the valve body 110. The pressure relief valve 100 is configured to be connected to the housing 11 of the battery pack 10, with the pressure relief hole 1100 of the valve body 110 establishing communication between the cavity 12 of the housing 11 to the outside of the housing 11. As illustrated in FIGS. 1 and 5, the pressure relief hole 1100 includes an inlet 1101 and an outlet 1102 opposite to each other in the length direction LD. When the pressure relief valve 100 is connected to the housing 11, the inlet 1101 of the pressure relief hole 1100 communicates with the cavity 12 of the housing 11, and the outlet 1102 of the pressure relief hole 1100 communicates with the outside of the housing 11. A battery module 13 is housed within the cavity 12 of the housing 11. When the thermal runaway occurs at the battery module 13, high-temperature gas ejected from the battery cell of the battery module 13 is discharged through the pressure relief hole 1100 to the outside of the housing 11 of the battery pack 10, thereby reducing internal pressure of the housing 11.

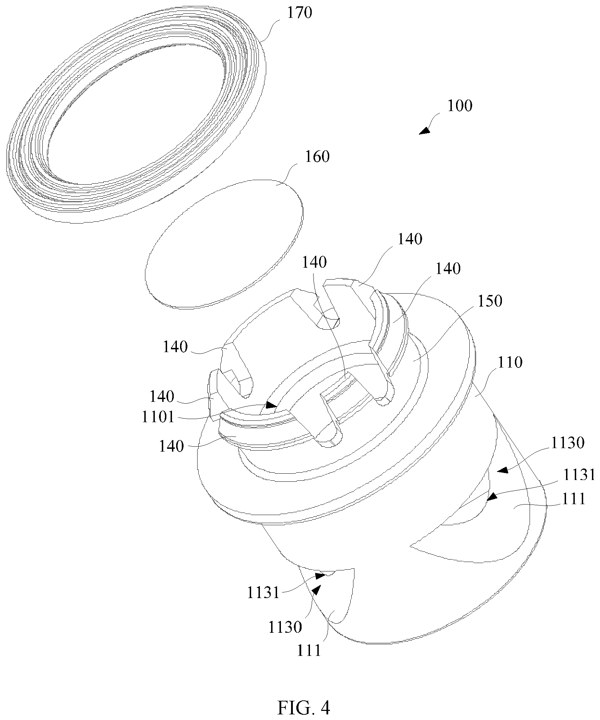

In some implementations, as shown in FIGS. 1 to 5, a whistle hole 1130 is formed at a side wall SW of the valve body 110 and penetrates through the side wall SW of the valve body 110. The whistle hole 1130 extends from the outer side surface 1104 of the valve body 110 to the inner side surface 1103 of the valve body 110, to form an opening 1131, at the inner side surface 1103, connected to (e.g. communicated with) the pressure relief hole 1100. The whistle hole 1130 is configured to generate a sound when a portion of the gas in the pressure relief hole 1100 is discharged through the whistle hole.

In some embodiments of the present disclosure, the pressure relief valve 100 is provided with the whistle hole 1130 on the outer side surface 1104 of the valve body 110. When the thermal runaway occurs in the battery module 13, the high-temperature gas ejected from battery cells of the battery module 13 is discharged to the outside of the housing 11 of the battery pack 10 through the pressure relief hole 1100 (as indicated by the arrow in FIG. 5). During ejection, a portion of the high-temperature gas is discharged through the whistle hole 1130 at high speed along with a generated sound signal thereform. In this case, even if the BMS fails and cannot send the thermal runaway fault signal timely for warning, the sound signal generated by the pressure relief valve 100 may be used for warning. The sound may arise from turbulence in the high-speed gas flowing through the whistle hole 1130 or from vibrations generated at the edges of the opening 1131 at a high speed due to the high-speed gas flowing through the whistle hole 1130. The present disclosure is not limited hereto, and the sound may be generated depending on the structure of the whistle hole.

In some implementations, the valve body 110 includes an inclined surface 111 at a side of the whistle hole 1130 along a direction from the inlet 1101 to the outlet 1102, or at a side of the whistle hole 1130 closer to the outlet 1102 than to the inlet 1101. The inclined surface 111 extends from the outer side surface 1104 of the valve body 110 to an edge of the opening 1131 of the whistle hole 1130 and is inclined toward the pressure relief hole 1100 in a direction from the outlet 1102 to the inlet 1101 of the pressure relief hole 1100. That is, the inclined surface is inclined counter-clockwise at a preset angle relative to a direction from the inlet 1101 to the outlet 1102, as shown in FIG. 5. The preset angle may be acute angle, and the present disclosure is not limited hereto. Thus, when the high-speed gas flowing in the pressure relief hole 1100 flows through the whistle hole 1130, it is easier to form a spiral vortex in the whistle hole 1130, enhancing gas vibration and sound volume.

As shown in FIGS. 1, 3, and 5, the valve body 110 may further include a side surface 112 at a side of the whistle hole 1130 along a direction from the outlet 1102 to the inlet 1101, or at a side of the whistle hole 1130 closer to the inlet 1101 than to the outlet 1102. The side surface 112 extends from the outer side surface of the valve body 110 to the edge of the opening 1131 of the whistle hole 1130. The side surface 112 connects with the inclined surface 111, so that they may enclose the whistle hole 1130. The side surface 112 is approximately perpendicular to the direction from the inlet 1101 to the outlet 1102.

In some implementations, the valve body 110 may be provided with a plurality of whistle holes 1130. Each whistle hole 1130 extends from the outer side surface 1104 of the valve body 110 to the inner side surface 1103 of the valve body 110, to be used to form an opening 1131 communicating with the pressure relief hole 1100 at the inner side surface 1103 of the valve body 110. When the high-temperature gas ejected from battery cells of the battery module 13 is discharged to the outside of the housing 11 of the battery pack 10 through the pressure relief hole 1100, a portion of the high-temperature gas is discharged through the whistle hole 1130 at high speed along with a generated sound therefrom, to increase the sound volume.

The plurality of whistle holes 1130 are circumferentially arranged at the side wall of the valve body around the valve body 110. That is, the plurality of whistle holes 1130 may be arranged along the circumferential direction of the valve body 110. A part of the gas in the pressure relief hole 1100 has a higher speed when discharged from the plurality of whistle holes 1130, and the generated sound has a greater volume. Further, the plurality of whistle holes 1130 are circumferentially arranged on the side wall of the valve body around the valve body 110, while the length of the valve body 110 in the direction from the inlet 1101 to the outlet 1102 of the pressure relief hole 1100 may be not increased.

Alternatively, the whistle holes 1130 may be sequentially arranged in the direction from the inlet 1101 to the outlet 1102 of the pressure relief hole 1100. When the high-temperature gas ejected from battery cells of the battery module 13 is discharged to the outside of the housing 11 of the battery pack 10 through the pressure relief hole 1100, a portion of the high-temperature gas is discharged through the whistle hole 1130 at high speed along with a generated sound therefrom.

It should be noted that the shapes of the plurality of the whistle holes 1130 provided at the valve body 110 may be same as each other, or may be different from each other. The present disclosure is not limited hereto, as long as the sound may be generated a portion of the high-temperature gas is discharged through the whistle hole 1130. It is noted that, the same shape of the plurality of the whistle holes 1130 may enable the plurality of the whistle holes 1130 more convenient to form.

In some implementations, as shown in FIGS. 1, 3, and 5, the pressure relief valve 100 may further include a flow divider 120 within the pressure relief hole 1100. The flow divider 120 divides the pressure relief hole 1100 into a plurality of flow channels 1121. The gas entering from the inlet 1101 is divided into respective ones of the flow channels, the flow channels 1121 are circumferentially arranged in the valve body around a center axis CA of the valve body 110 and are communicated with the openings 1131 of the whistle holes 1130, respectively. Thus, a portion of the high-speed gas in each of the flow channels 1121 is discharged from the corresponding one of the whistle holes 1130 without interfering with each other, thereby increasing the volume of the sound generated when the high-speed gas is discharged from the whistle hole 1130.

The flow channels 1121 may be located between the inlet 1101 and outlet 1102 of the pressure relief hole 1100 or may be spaced apart from the inlet 1101 and the outlet 1102 of the pressure relief hole 1100 in a length direction of the valve body 110. Alternatively, the flow channel 1121 may extend from the inlet 1101 to the outlet 1102 of the pressure relief hole 1100.

In some implementations, the flow divider 120 includes a plurality of flow-dividing plates 121 circumferentially arranged around the center axis of the valve body 110. Two adjacent ones of the flow-dividing plates 121 and the inner side surface 1103 of the valve body cooperatively enclose the flow channel 1121. In an embodiment, each of the plurality of flow-dividing plates 121 has a first side edge extending in the direction from the inlet 1101 to the outlet 1102 of the pressure relief hole 1100 and the first side edges of respective ones of the plurality of flow-dividing plates 121 are connected to or in contact with each other. An angle is formed by two adjacent ones of the flow-dividing plates 121. Each of the plurality of flow-dividing plates 121 further includes a second side edge opposite to the first side edge in the radial direction of the valve body 110 and the second side edge is connected to the inner side surface 1103 of the valve body 110. Thus, two adjacent ones of the flow-dividing plates 121 and the inner side surface of the valve body 110 cooperatively enclose the flow channel 1121. The second side edge of the flow-dividing plate 121 may be integrally connected to the valve body 110 to improve the connection stability between the flow divider 120 and the valve body 110, so that the flow divider 120 may stably divide the gas into the pressure relief hole 1100.

As shown in FIGS. 1 to 4, the pressure relief valve 100 further includes a sealing film 160 connected to the valve body 110, the valve body 110 covers or closes off the inlet 1101 to block impurities such as moisture, water or dust from entering the cavity 12 of the housing 11 of the battery pack 10 through the pressure relief hole 1100 of the pressure relief valve 100. The sealing film 160 may be a waterproof and breathable film, to allow the gas to pass through the sealing film 160 while blocking impurities such as moisture, water, dust, or other impurities from entering the cavity 12 through the pressure relief hole 1100. Thus the sealing film 160 may maintain the pressure difference between the cavity 12 in the housing 11 and the external environment outside of the housing 11, and avoid the sealing film 160 from being burst due to the too high pressure in the cavity 12 when the battery module 13 in the cavity 12 has not yet experienced thermal runaway.

A sharp portion 130 is disposed at the valve body 110 of the pressure relief valve 100. The sharp portion 130 is disposed at a side of the sealing film 160 close to the flow-dividing plates 121 along in the direction from the inlet 1101 to the outlet 1102 of the pressure relief hole 1100 and the sharp portion 130 is configured to puncture the sealing film 160. When the battery module 13 within the cavity 12 of the housing 11 experiences the thermal runaway, the pressure within the cavity 12 of the housing 11 increases rapidly, to cause the sealing film 160 to expand and deform toward the sharp portion 130. The sealing film 160 deform toward the sharp portion 130 until it contacts the sharp portion 130. In this case, the sharp portion 130 punctures the sealing film 160, so that the high-temperature and high-pressure gas within the cavity 12 is quickly discharged through the pressure relief hole 1100, and a part of the high-temperature and high-pressure gas passing through the pressure relief hole 1100 is discharged through the whistle hole 1130 and generates the sound.

In some implementations, the sharp portion 130 may be disposed on a side of the flow divider 120 facing the sealing film 160. The sharp portion 130 is more convenient to be formed, and there is no need to set a hold structure in the pressure relief hole 1100 configured to fix the sharp portion 130.

The sharp portion 130 is located within the pressure relief hole 1100. The sharp portion 130 includes a tip 131 and a connection end 132. The tip 131 and the connection end 132 are located at two sides of the sharp portion 130 opposite to each other in the direction from the inlet 1101 to the outlet 1102. The tip 131 of the sharp portion 130 faces the sealing film 160. The connection end 132 of the sharp portion 130 is connected to a side of the flow divider 120 facing the sealing film 160. The sharp portion 130 is located at the first side edges of the flow-dividing plates 121, so that the sharp portion 130 is substantially at the center of the pressure relief hole 1100. Thus, when the sharp portion 130 contacts the expanded sealing film 160, the sharp portion 130 may puncture the sealing film 160 at the center of the sealing film 160.

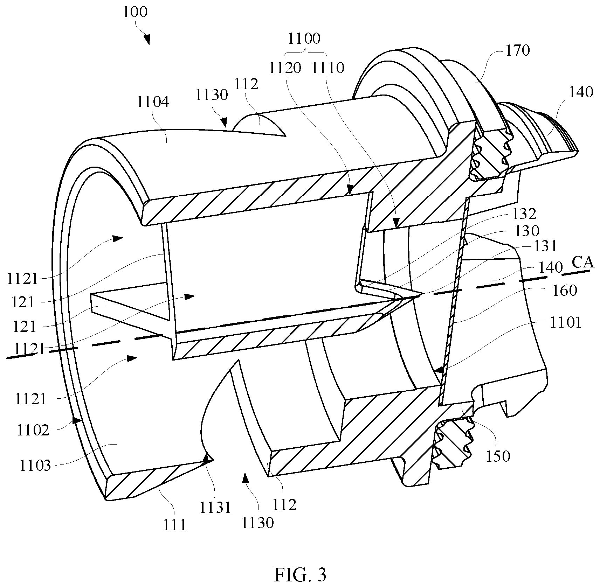

As shown in FIGS. 3 and 5, the pressure relief hole 1100 includes a first hole segment 1110 and a second hole segment 1120 arranged along the direction from the inlet 1101 to the outlet 1102. The opening 1131 of the whistle hole 1130 is located at the second hole segment 1120. That is, the opening 1131 of the whistle hole 1130 is in communication with the second hole segment 1120. The high-speed gas entering from the inlet 1101 of the pressure relief hole 1100 first flows through the first hole segment 1110 and then enters the second hole segment 1120. A part of the high-speed gas in the second hole segment 1120 is discharged through the whistle hole 1130 and generates the sound, while another part of the high-speed gas in the second hole segment 1120 flows through the second hole segment 1120 towards the outlet 1102 of the pressure relief hole 1100.

In some implementations, the radial cross-sectional area of the first segment 1110 is less than that of the second hole segment 1120. The radial cross-sectional area of the first hole segment 1110 is set to be less than that of the second hole segment 1120, thereby increasing the air flow velocity of the gas in the first hole segment 1110, and thereby increasing the gas flow rate of the gas transmitted from the first hole segment 1110 to the second hole segment 1120 and discharged through the whistle hole 1130 to produce the louder sound.

It should be noted that the radial cross-sectional area(s) of the first hole segment 1110 and/or the second hole segment 1120 refers to the area of the region enclosed by the closed contour line formed by the intersection of the inner side surface of the first hole segment 1110 and/or the second hole segment 1120 with a plane perpendicular to the axial direction of the pressure relief hole (1100) (i.e., the direction from the inlet 1101 to the outlet 1102 of the pressure relief hole 1100).

The radial cross-sectional area of the first hole segment 1110 may be less than or equal to 80 mm², so that the gas has a higher speed when flowing through the first hole segment 1110. The radial cross-sectional area of the first hole segment 1110 may be 75 mm², 60 mm², 50 mm², 30 mm², etc. The radial cross-sectional area of the first hole segment 1110 is not limited hereto, and it may be determined according to the type of battery pack 10.

In addition, the radial cross-sectional area of the first hole segment 1110 may be greater than or equal to 12 mm² to avoid the radial cross-sectional area of the first hole segment 1110 being too less, which causes the high-temperature and high-pressure gas in the cavity 12 to be unable to be discharged through the pressure relief hole 1100 in time when the thermal runaway occurs at the battery module 13. The radial cross-sectional area of the first hole segment 1110 may be 20 mm², 25 mm², 40 mm², 45 mm², etc. The radial cross-sectional area of the first hole segment 1110 is not limited hereto, and it may be determined according to the type of battery pack 10.

In some implementations, the distance between the end of the first hole segment 1110 away from the inlet 1101 and an edge of the opening 1131 of the whistle hole 1130 close to the inlet 1101 may be made less than or equal to 6 mm. As a result, it is possible to make the opening 1131 of the whistle hole 1130 closer to the first hole segment 1110. Therefore, when the gas with a higher velocity is discharged from the end of the first hole segment 1110 away from the inlet 1101 of the pressure relief hole 1100, a portion of the gas may quickly enter into the whistle hole 1130, and be discharged through the whistling hole 1130 to generate the sound with higher volume. The distance between the end of the first hole segment 1110 away from the inlet 1101 and the edge the opening 1131 of the whistle hole 1130 close to the inlet may be less than 5.5 mm, 4 mm, etc. The distance is not limited hereto, and it may be determined depending on the structure of the valve body 110.

In addition, the distance between the end of the first hole segment 1110 away from the edge of the inlet 1101 and the opening 1131 close to the inlet may be made to be greater than or equal to 3 mm, to avoid the opening 1131 of the whistle hole 1130 from being too close to the first hole segment 1110, which may cause the opening 1131 of the whistle hole 1130 to be blocked by the step at the connection of the first hole segment 1110 and the second hole segment 1120. Gas discharged from the end of the first hole segment 1110 away from the inlet 1101 of the pressure relief hole 1100 is not able to enter the whistle hole 1130 through the opening 1131, or a portion of the gas entering the whistle hole 1130 is too less in an amount thereof, resulting in a failure to generate the sound. The distance between the end of the first hole segment 1110 away from the inlet 1101 and the edge of the opening 1131 of the whistle hole 1130 close to the inlet may be less than 3.5 mm, 4.5 mm, etc. The distance is not limited hereto, and it may be determined depending on the structure of the valve body 110.

In some embodiments, when the pressure relief valve 100 includes the flow divider 120, the flow divider 120 may be located in the second hole segment 1120, so that the flow divider 120 divides the second hole segment 1120 into the plurality of flow channels 1121. In an embodiment, the second side edges of the plurality of flow-dividing plates 121 of the flow divider 120 may be connected to the inner side surface of the second hole segment 1120, respectively, so that two adjacent ones of the flow-dividing plates 121 and the inner side surface of the second hole segment 1120 cooperatively enclose the flow channel 1121. The flow-dividing plate 121 may extend from the end surface of the second hole segment 1120 close to the first hole segment 1110 towards the outlet 1102 of the pressure relief hole 1100. Therefore, the gas is discharged from the end of the first hole segment 1110 away from the inlet 1101 of the pressure relief hole 1100 (that is, discharged from the connection of the first and second hole segments) and then immediately enters respective ones of the flow channels 1121, so that the gas in the flow channel 1121 also may flow at a higher speed.

As shown in FIGS. 1 to 5, the pressure relief valve 100 includes a snap-fit portion140, the snap-fit portion 140 protrudes from an end surface of the valve body 110 where the inlet 1101 is located. Thus, the snap-fit portion 140 may be snap-fitted with the housing, so that the pressure relief valve 100 may be quickly connected to the housing. There may be a plurality of snap-fit portions 140, and the plurality of snap-fit portions 140 may be arranged along the circumference of the inlet 1101, so as to improve the connection stability between the pressure relief valve 100 and the housing.

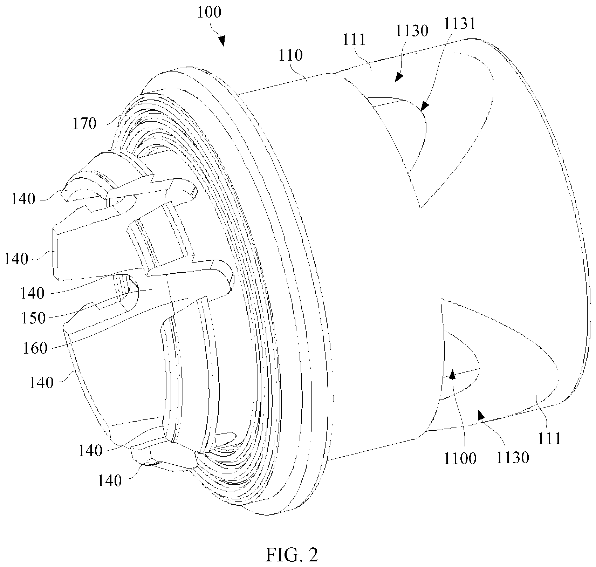

In some embodiments, as shown in FIGS. 2 to 4, the pressure relief valve 100 may further include a sealing member 170 disposed at an end of the valve body 110 where the inlet 1101 is provided. When the pressure relief valve 100 is connected to the housing, it is possible to seal the gap between the valve body 110 and the housing by using the sealing member 170. The sealing member 170 may be provided opposite an end surface of the end of the valve body 110 where the inlet 1101 is provided. When the pressure relief valve 100 is connected to the housing, the sealing member 170 is sandwiched between the housing and the end surface of the end of the valve body 110 where the inlet 1101 is provided, thereby sealing the gap between the housing and the end surface of the end of the valve body 110 where the inlet 1101 is provided.

In an embodiment, a mounting projection 150 may protrude from the end surface of the end of the valve body 110 where the inlet 1101 is provided. The mounting projection 150 circumferentially extends around a center axis of the inlet 1101 (or, the center axis CA of the valve body 110) to form an annular structure. The center axis of the inlet 1101 may be aligned with the center axis CA of the valve body 110. The sealing member 170 is an annular seal ring and is sleeved on the mounting projection 150 such that the sealing member 170 may be provided opposite an end surface of the end of the valve body 110 where the inlet 1101 is provided. Each snap-fit portion 140 projects from the end surface of the mounting projection 150 away from the valve body 110. The plurality of snap-fit portions 140 are spaced apart from each other along a perimeter of the mounting projection 150.

With continued reference to FIGS. 2 to 4, the inner edge of the valve body 110 at the inlet 1101 is not aligned with the inner side surface of the mounting protrusion 150. That is, there is a spacing between the inner edge of the inlet 1101 of the valve body 110 and the inner side surface of the mounting protrusion 150 in a radial direction of the valve body 110. The sealing film 160 is located in the space enclosed by the mounting protrusion 150. The sealing film 160 is provided on the end surface of the end of the valve body 110 where the inlet 1101 is provided and configured to seal the inlet 1101. A side surface of the sealing film 160 may be adhered to the end surface of the valve body 110 opposite to the side surface of the sealing film 160.

Some embodiments of the present disclosure further provide a battery pack, which includes a pressure relief valve. The specific structure of the pressure relief valve refers to the above embodiments. Since the battery pack may adopt any of the technical solutions of the above embodiments, it at least has all the beneficial effects brought by the technical solutions of the above embodiments, which will not be repeated here.

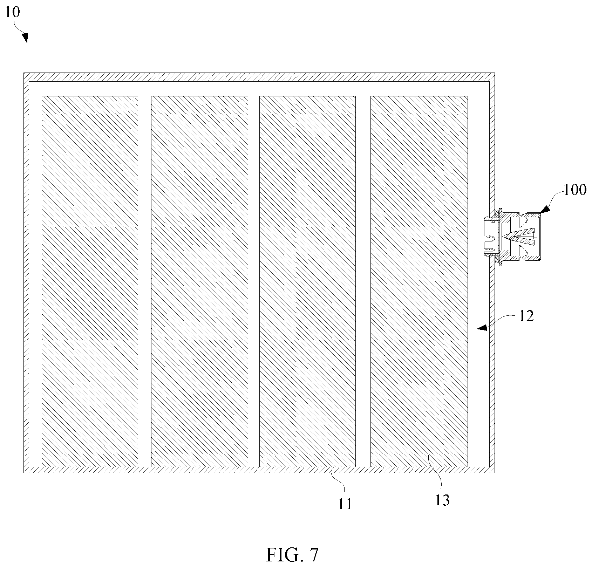

As shown in FIGS. 6 and 7, the battery pack 10 includes a housing 11, a battery module 13, and a pressure relief valve 100. The housing 11 includes a cavity 12, the battery module 13 is arranged within the cavity 12, the pressure relief valve 100 is connected to the housing 11, and the pressure relief hole 1100 of the valve body 110 of the pressure relief valve 100 is configured to connect the cavity 12 of the housing 11 with the outside of the housing 11, so that the cavity of the housing communicates with the outside of the housing.

The battery pack 10 according to an embodiment of the present disclosure is configured to connect the cavity 12 of the housing 11 with the outside of the housing 11 through the pressure relief hole 1100 of the valve body 110 of the pressure relief valve 100. The pressure relief valve 100 is provided with the whistle hole 1130 on the outer side surface 1104 of the valve body 110. When the thermal runaway occurs in the battery module 13, the high-temperature gas ejected from battery cells of the battery module 13 is discharged to the outside of the housing 11 of the battery pack 10 through the pressure relief hole 1100. During ejection, a portion of the high-temperature gas is discharged through the whistle hole 1130 of the valve body 110 at high speed along with a generated sound signal thereform. In this case, even if the BMS fails and cannot send the thermal runaway fault signal timely for warning, the sound signal generated by the pressure relief valve 100 may be used for warning.

## Claims

1. A pressure relief valve (100), **characterized in that** the pressure relief valve (100) comprises a valve body (110), wherein the valve body (110) is provided with a pressure relief hole (1100) penetrating through the valve body (110) along a length direction (LD) of the valve body (110), at least one whistle hole (1130) is disposed at a side wall (SW) of the valve body (110), each of the at least one whistle hole (1130) extends from an outer side surface (1104) of the valve body (110) to an inner side surface (1103) of the valve body (110) , to form an opening (1131) communicated with the pressure relief hole (1100) at the inner side surface(1103), and the whistle hole (1130) is configured to generate a sound when a portion of gas in the pressure relief hole (1100) is discharged through the whistle hole (1130).

2. The pressure relief valve (100) of claim 1, wherein the pressure relief hole (1100) comprises an inlet (1101) and an outlet (1102) opposite to each other, the valve body (110) further comprises an inclined surface (111) located at a side of the whistle hole (1130) closer to the outlet (1102) than to the inlet (1101), the inclined surface (111) extends from the outer side surface (1104) to an edge of the opening (1131), and is inclined counter-clockwise at a preset angle relative to a direction from the inlet (1101) to the outlet (1102).

3. The pressure relief valve (100) of claim 1, wherein the at least one whistle hole (1130) comprises a plurality of whistle holes (1130), and the plurality of whistle holes (1130) are circumferentially arranged at the side wall (SW) of the valve body (110) around the valve body (110).

4. The pressure relief valve (100) of claim 3, further comprising a flow divider (120) disposed within the pressure relief hole (1100), wherein the flow divider (120) divides the pressure relief hole (1100) into a plurality of flow channels (1121), the plurality of flow channels (1121) are circumferentially arranged in the valve body (110) around a center axis (CA) of the valve body (110), and the plurality of flow channels (1121) are communicated with the openings (1131) of the plurality of whistle holes (1130), respectively.

5. The pressure relief valve (100) of claim 4, wherein the flow divider (120) comprises a plurality of flow-dividing plates (121) circumferentially arranged around the center axis (CA) of the valve body (110), and two adjacent ones of the flow-dividing plates (121) and the inner side surface (1103) of the valve body (110) enclose the flow channel (1121).

6. The pressure relief valve (100) of claim 5, wherein the pressure relief hole (1100) comprises an inlet (1101) and an outlet (1102) opposite to each other, the plurality of flow-dividing plates (121) have first side edges extending in a direction from the inlet (1101) to the outlet (1102), respectively, the first side edges of respective ones of the plurality of flow-dividing plates (121) are connected to each other, two adjacent ones of the plurality of flow-dividing plates (121) are arranged at an angle, each of the plurality of flow-dividing plates (121) further comprises a second side edge opposite to the first side edge, and the second side edge is connected to the inner side surface (1103) of the valve body (110), so that two adjacent ones of the plurality of flow-dividing plates (121) and the inner side surface (1103) of the valve body (110) enclose the flow channel (1121).

7. The pressure relief valve (100) of claim 6, wherein the second side edge of the flow-dividing plate (121) is integrally connected to the valve body (110).

8. The pressure relief valve (100) of claim 4, wherein the pressure relief hole (1100) comprises an inlet (1101) and an outlet (1102) opposite to each other, the pressure relief valve (100) further comprises a sealing film (160) connected to the valve body (110), the sealing film (160) closes off the inlet (1101), and a sharp portion (130) is disposed on a side of the flow divider (120) facing the sealing film (160).

9. The pressure relief valve (100) of claim 8, wherein the sealing film (160) is a waterproof and breathable film.

10. The pressure relief valve (100) of claim 8, wherein the sharp portion (130) comprises a tip (131) and a connection end (132), the tip (131) faces the sealing film (160), and the connection end (132) is connected to the side of the flow divider (120) facing the sealing film (160), and
wherein the sealing film (160) is provided on an end surface of the valve body (110) where the inlet (1101) is located.

11. The pressure relief valve (100) of any one of claims 1 to 10, wherein the pressure relief hole (1100) comprises an inlet (1101) and an outlet (1102) opposite to each other, the pressure relief hole (1100) comprises a first hole segment (1110) and a second hole segment (1120) arranged along a direction from the inlet (1101) to the outlet (1102), the opening (1131) is located at the second hole segment (1120), and a radial cross-sectional area of the first hole segment (1110) is less than a radial cross-sectional area of the second hole segment (1120).

12. The pressure relief valve (100) of claim 11, wherein the radial cross-sectional area of the first hole segment (1110) is greater than or equal to 12 mm² and the radial cross-sectional area of the first hole segment (1110) is less than or equal to 80 mm², and
wherein a distance between an end of the first hole segment (1110) away from the inlet (1101) and an edge of the opening (1131) close to the inlet (1101) is less than or equal to 6 mm and the distance between the end of the first hole segment (1110) away from the inlet (1101) and the edge of the opening (1131) is greater than or equal to 3 mm.

13. The pressure relief valve (100) of claim 11, further comprising a flow divider (120), the flow divider (120) is arranged in the second hole segment (1120) and divides the second hole segment (1120) into a plurality of flow channels (1121), the plurality of flow channels (1121)are circumferentially arranged in the second hole segment (1120) around a center axis (CA) of the valve body (110), the flow channel (1121) is communicated with the opening (1131) of the at least one whistle hole (1130) in a one-to-one correspondence.

14. The pressure relief valve (100) of claim 13, wherein the flow divider (120) comprises a plurality of flow-dividing plates (121) circumferentially arranged around the center axis (CA) of the valve body (110), and two adjacent ones of the flow-dividing plates (121) and the inner side surface (1103) of the valve body (110) enclose the flow channel (1121).

15. The pressure relief valve (100) of claim 14, wherein each of the plurality of flow-dividing plates (121) extends from an end surface of the second hole segment (1120) close to the first hole segment (1110) toward the outlet (1102).

16. The pressure relief valve (100) of any one of claims 1 to 15, wherein the pressure relief hole (1100) comprises an inlet (1101) and an outlet (1102) opposite to each other, and the pressure relief valve (100) further comprises a snap-fit portion (140), the snap-fit portion (140) protrudes from an end surface of the valve body (110) where the inlet (1101) is provided, and the snap-fit portion (140) is configured to be snap-fitted with a housing (11) of a battery pack (10) comprising the pressure relief valve (100), and
wherein the pressure relief hole (1100) comprises an inlet (1101) and an outlet (1102) opposite to each other, and the pressure relief valve (100) further comprises a sealing member (170), wherein the sealing member (170) is disposed at an end of the valve body (110) where the inlet (1101) is provided, and the sealing member (170) is configured to seal a gap between the valve body (110) and a housing (11) of a battery pack (10) comprising the pressure relief valve (100).

17. A battery pack (10), **characterized in that** the battery pack (10) comprises:
a housing (11), comprising a cavity (12);
a battery module (13) disposed within the cavity (12); and
the pressure relief valve (100) of any one of claims 1 to 16, wherein the pressure relief valve (100) is connected to the housing (11), and the pressure relief hole (1100) of the pressure relief valve (100) is configured to communicate the cavity (12) with outside of the housing (11).
